# EUROPEAN PATENT APPLICATION

(11) **EP 4 756 962 A1**
(43) Date of publication of application: **10.06.2026**
(21) Application number: 25205612.2
(22) Date of filing: 30.09.2025
(51) Int. Cl.: H01M 10/054, H01M 10/0567, H01M 10/0568

(54) **ELECTROLYTE COMPOSITION AND ALUMINUM BATTERY CONTAINING THE SAME**

(30) Priority: 04.12.2024 TW 113147082
(71) Applicant: APh ePower Co., Ltd., Kaohsiung City 821 (TW)
(72) Inventor: TSAI, Shih Po-Ta, 821 Kaohsiung City (TW); YANG, Chun-Chieh, 821 Kaohsiung City (TW); HUNG, Wei-Chieh, 821 Kaohsiung City (TW); HUANG, Wan-Wen, 821 Kaohsiung City (TW)
(74) Representative: Viering, Jentschura & Partner mbB Patent- und Rechtsanwälte

(57) **Abstract**

An electrolyte composition including an aluminum salt, an ionic liquid, and a phthalocyanine coordination compound is provided. The anion of the aluminum salt is F⁻, Cl⁻, Br⁻, I⁻, BF₄⁻, PF₆⁻, [(CF₃SO₂)₂N]⁻, CF₃SO₃⁻, NO₃⁻, CH₃CO₂⁻, SO₄²⁻, C₂O₄²⁻, or [B(C₂O₄)₂]⁻. The ionic liquid has a structure as shown in formula (I) in the specification. The phthalocyanine coordination compound contains a divalent metal ion. In the electrolyte composition, the weight of the aluminum salt is greater than that of the ionic liquid, and the weight of the ionic liquid is greater than that of the phthalocyanine coordination compound. An aluminum battery (100) containing the electrolyte composition (20) is also provided.

## Description

### BACKGROUND

### Technical Field

The present disclosure relates to an electrolyte composition for use in an aluminum battery, and also relates to an aluminum battery containing the electrolyte composition.

### Related Art

With the popularization of electric vehicles and various electronic mobile devices, as well as the instability and intermittency of renewable energy sources such as wind energy and solar energy, there is an urgent demand for energy storage technology in modern society. Lithium-ion batteries are currently one of the most mature and widely used energy storage devices, and they have good performance in terms of conversion efficiency, energy density and service life. However, due to the limited reserves of lithium resources, the future acquisition cost of its raw materials is gradually increasing, which poses a great challenge to the future development of lithium batteries.

In view of this, researchers in the field of energy storage devices have begun to study "aluminum", one of the most abundant metals in the earth's crust, and there are currently technologies related to aluminum batteries.

### SUMMARY

However, the energy density (energy storage per unit weight) of aluminum batteries is generally lower than that of lithium batteries. Although increasing the charging voltage of the battery may increase the energy storage per unit weight, if the increased charging voltage exceeds the electrochemical stability window (ESW, i.e., the potential range in which the electrolyte solution can stably exist in the electrochemical system) of the electrolyte solution in the battery, it will lead to the decomposition of the components in the electrolyte solution and the generation of undesirable products. In addition to consuming the electrolyte solution and reducing the charge and discharge performance and service life of the aluminum battery, some of these undesirable products are gaseous components, which also raises safety concerns such as battery expansion and damage.

The present disclosure provides an electrolyte composition for use in an aluminum battery, containing a phthalocyanine coordination compound. Compared with cases without the phthalocyanine coordination compound, the electrolyte composition has better stability and a wider electrochemical stability window. Based on this, in the charge and discharge process at a general voltage, since the ionic liquid in the electrolyte composition is less prone to decomposition, the generation of gas may be reduced, thereby improving the battery life and safety. On the other hand, since the electrolyte composition has a wider electrochemical stability window, a battery using the electrolyte composition may achieve a higher charge cut-off voltage than before, further increasing the energy density of the aluminum battery.

Specifically, the present disclosure provides an electrolyte composition, including an aluminum salt, an ionic liquid and a phthalocyanine coordination compound. An anion in the aluminum salt is F⁻, Cl⁻, Br⁻, I⁻, BF₄⁻, PF₆⁻, [(CF₃SO₂)₂N]⁻, CF₃SO₃⁻, NO₃⁻, CH₃CO₂⁻, SO₄²⁻ , C₂O₄²⁻, or [B(C₂O₄)₂]⁻. The ionic liquid has a structure of formula (I) as shown in the specification. The phthalocyanine coordination compound contains a divalent metal ion. In the electrolyte composition, a weight of the aluminum salt is greater than that of the ionic liquid, and the weight of the ionic liquid is greater than that of the phthalocyanine coordination compound.

The present disclosure also provides an aluminum battery containing the aforementioned electrolyte composition. Specifically, the aluminum battery includes a positive electrode, a separator, a negative electrode and the aforementioned electrolyte composition. The negative electrode is separated from the positive electrode by the separator, the electrolyte composition is disposed between the positive electrode and the negative electrode, and the separator is immersed in the electrolyte composition.

The inventors have found that the π-electron conjugation system of phthalocyanine facilitates the formation of coordination between N atoms with lone pair electrons in the phthalocyanine ring and cations in the ionic liquid, thereby stabilizing the cations in the ionic liquid in the electrolyte composition and expanding the electrochemical stability window range of the electrolyte composition. Based on this, the possibility of decomposition of the ionic liquid may be reduced, thereby improving the battery life and safety. On the other hand, the aluminum battery using the electrolyte composition may have a higher charge cut-off voltage, further increasing the energy density of the aluminum battery.

### BRIEF DESCRIPTION OF THE DRAWINGS

The instant disclosure will become more fully understood from the detailed description given herein below for illustration only, and thus not limitative of the instant disclosure, wherein:
FIG. 1 illustrates a schematic diagram of an aluminum battery according to an embodiment of the present disclosure.
FIG. 2 illustrates a cyclic voltammogram measured at a voltage range of 1.0 to 2.8 V and at a scanning rate of 2 mV/s for an aluminum battery formed using an electrolyte composition according to an embodiment of the present disclosure.
FIG. 3 illustrates a cyclic voltammogram measured at a voltage range of 1.0 to 2.8 V and at a scanning rate of 2 mV/s for an aluminum battery formed using an electrolyte of a comparative example.
FIG. 4 illustrates a cyclic voltammogram measured at a voltage range of 1.0 to 3.0 V and at a scanning rate of 2 mV/s for an aluminum battery formed using an electrolyte composition according to an embodiment of the present disclosure.
FIG. 5 illustrates a comparison diagram showing discharge capacity results of an aluminum battery formed using an electrolyte composition according to an embodiment of the present disclosure and an aluminum battery formed using the electrolyte of the comparative example at a same charge cut-off voltage (2.4 V).

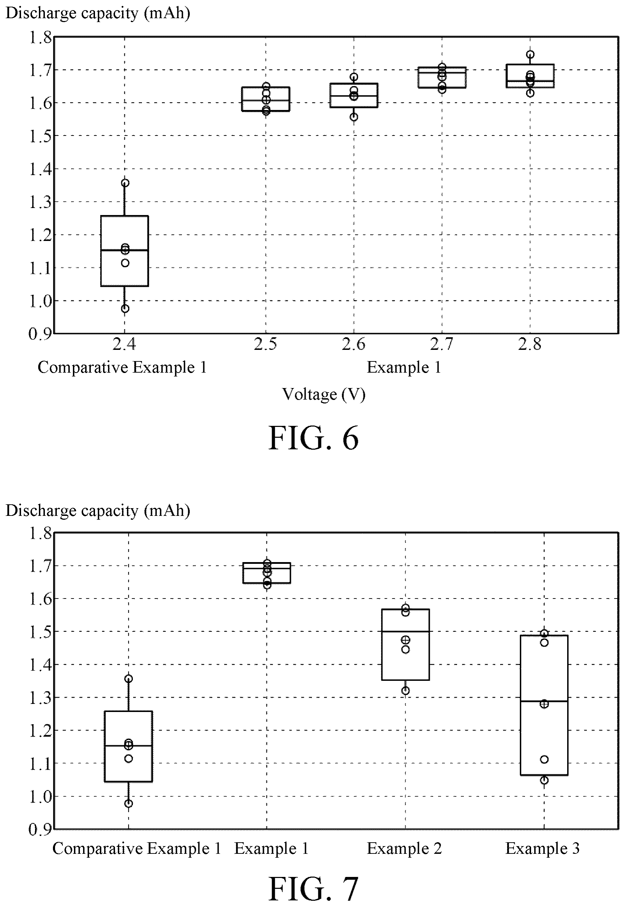

FIG. 6 illustrates a comparison diagram showing discharge capacity results of an aluminum battery formed using an electrolyte composition according to an embodiment of the present disclosure and an aluminum battery formed using the electrolyte of the comparative example at different charge cut-off voltages (the charge cut-off voltage of the aluminum battery formed using the electrolyte of the comparative example is 2.4 V; and the charge cut-off voltages of the aluminum battery formed using the electrolyte composition according to the embodiment of the present disclosure are 2.5 V, 2.6 V, 2.7 V and 2.8 V).
FIG. 7 illustrates a comparison diagram showing discharge capacity results of multiple aluminum batteries formed using electrolyte compositions according to multiple embodiments of the present disclosure and an aluminum battery formed using the electrolyte of the comparative example. The charge cut-off voltage of the aluminum battery formed using the electrolyte of the comparative example is 2.4 V, and the charge cut-off voltage of the multiple aluminum batteries formed using the electrolyte compositions according to the multiple embodiments of the present disclosure is a relatively high voltage of 2.7 V.

### DETAILED DESCRIPTION

The following provides a detailed description of an electrolyte composition described in the present disclosure and an aluminum battery containing the electrolyte composition. It should be understood that the following descriptions provide many different embodiments, which are only used as examples and not as limitations of the present disclosure. In addition, the phrase "in one embodiment" or "in an embodiment" appearing in different parts of the specification does not necessarily refer to the same embodiment. Furthermore, unless otherwise described or clearly contradicted herein, the features and structures described herein may be combined in one or more embodiments by any suitable method.

In this specification, the description of "from one numerical value to another numerical value" is a summary expression to avoid listing all numerical values in the range one by one in the present disclosure. Therefore, unless otherwise specified or clearly contrary to common knowledge in the technical field of the present disclosure, a specific numerical range described in the present disclosure is equivalent to disclosing any numerical values within the numerical range and the smaller numerical range defined by any numerical values within the numerical range (including its significant digits and the next digit of the significant digits), just as if such numerical values and the smaller numerical range were explicitly written in the specification. For example, when the specification states "1 to 10," it is equivalent to disclosing the ranges such as "3 to 5" and "2.5 to 6.8", regardless of whether other numerical values are listed in the specification.

### [Electrolyte Composition]

The present disclosure provides an electrolyte composition, including (A) an aluminum salt, (B) an ionic liquid, and (C) a phthalocyanine coordination compound.

### (A) Aluminum salt

An aluminum salt is a compound composed of aluminum ions and anions. In an embodiment, an anion in the aluminum salt is F⁻, Cl⁻, Br⁻, I⁻, BF₄⁻, PF₆⁻, [(CF₃SO₂)₂N]⁻, CF₃SO₃⁻, NO₃⁻, CH₃CO₂⁻, SO₄²⁻, C₂O₄²⁻, or [B(C₂O₄)₂]⁻. For example, the aluminum salt may be AlF₂, AlF₃, AlCl₂, AlCl₃, AlBr₂, AlBr₃, AlI₂, or AlI₃. In some embodiments, the aluminum salt may be AlF₃, AlCl₃, AlBr₃, or AlI₃. In some embodiments, the aluminum salt may be AlCl₃.

### (B) Ionic liquid

In the present disclosure, the ionic liquid may have a structure of the following formula

(I): 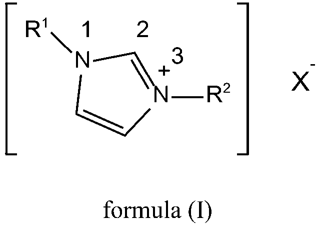 where R¹ and R² are each independently selected from C₁-C₅ alkyl and C₂-C₅ alkenyl; and X⁻ is selected from F⁻, Cl⁻, Br⁻, I⁻, BF₄⁻, PF₆⁻, [(CF₃SO₂)₂N]⁻, CF₃SO₃⁻, NO₃⁻, CH₃CO₂⁻, SO₄²⁻, C₂O₄²⁻, and [B(C₂O₄)₂]⁻.

In some embodiments, R¹ and R² are each independently selected from C₁-C₃ alkyl. For example, the ionic liquid may be 1-ethyl-3-methylimidazolium salt ([EMIm]⁺X⁻) or 1-propyl-3-methylimidazolium salt ([PMIm]⁺X⁻).

In some embodiments, in order to simplify the reaction of the battery during the charge and discharge processes, the anion X⁻ in formula (I) is the same as the anion in the aforementioned aluminum salt. For example, in the electrolyte composition, the aluminum salt is AlCl₃, and the ionic liquid is 1-ethyl-3-methylimidazolium chloride ([EMIm]⁺Cl⁻) Thus, the anions in both are chloride ions.

### (C) Phthalocyanine coordination compound

The phthalocyanine coordination compound of the present disclosure is a compound in which a divalent metal ion is coordinated in phthalocyanine. In some embodiments, the phthalocyanine coordination compound is at least one selected from the group consisting of: copper phthalocyanine, iron phthalocyanine, nickel phthalocyanine, zinc phthalocyanine, and cobalt phthalocyanine.

The inventors have found that the π-electron conjugation system of phthalocyanine facilitates the formation of coordination between N atoms with lone pair electrons in the phthalocyanine ring and cations in the ionic liquid, thereby stabilizing the relatively easily dissociable H at the position 2 of the cation in formula (I) of the ionic liquid. Thus, the phthalocyanine coordination compound improves the stability of the electrolyte composition, and further expanding the overall electrochemical stability window range of the electrolyte composition.

### (D) Additive

In some embodiments, the electrolyte composition may further include an additive to enhance the overall performance of an aluminum ion battery containing the electrolyte composition. For example, the aforementioned additive may include the following components: pyrrole, pyrazole, imidazole, oxazole, isoxazole, thiazole, benzimidazole, pyridine, indole, indoline, carbazole, pyridazine, pyrimidine, pyrazine, purine, acridine, phenazine, phenothiazine, quinolone, iso-quinolone, pteridine, 1,10-phenanthroline, 1,7-phenanthroline, 4,7-phenanthroline, 1,10-phenanthroline monohydrate, 1,10-phenanthroline monohydrochloride monohydrate, 3,4,7,8-tetramethyl-1,10-phenanthroline, 4,7-dihydroxy-1,10-phenanthroline, 5,6-dimethyl-1,10-phenanthroline, 5-chloro-1,10-phenanthroline, 1,10-phenanthroline-5,6-dione, 4-pyridinecarboxylic acid hydrazide, 3-pyridinecarboxylic acid hydrazide, 4-pyridyl hydrazide, 4-pyridinecarboxaldehyde, 4-methoxypyridine, 3-methoxypyridine, 2-methoxypyridine, 4-aminopyridine, 4-(aminomethyl)pyridine, pyridine-4-carboxamide, pyridine-3-carboxamide, pyridine-2-carboxamide, pyridine-3-carboxylic acid, 4-cyanopyridine, Janus Green B (8-(4-dimethylaminophenyl)diazenyl-N,N-diethyl-10-phenylphenazin-10-ium-2-amine chloride), or a combination thereof. These components may be adsorbed on the negative electrode in the charge process of the aluminum battery, changing the crystal growth plane of an electrodeposited layer and affecting the deposition rate of aluminum nuclei. Therefore, relatively small aluminum nuclei are formed during the charge process, and then a dense, uniform, and highly flat electro-deposited layer (aluminum metal layer) can be obtained, thereby preventing the formation of spiky aluminum dendrites, reducing the occurrence of short circuits, and thus prolonging the battery life.

In the electrolyte composition of the present disclosure, a weight of the aluminum salt is greater than that of the ionic liquid, and the weight of the ionic liquid is greater than that of the phthalocyanine coordination compound. In some embodiments, a weight proportion of the aluminum salt in the electrolyte composition is between 50 wt% and 65 wt%. If the weight proportion of the aluminum salt in the electrolyte composition is less than 50 wt% (i.e., insufficient aluminum salt), it will lead to poor conductivity of the subsequently formed battery; if the weight proportion of the aluminum salt in the electrolyte composition is higher than 65 wt% (i.e., excessive aluminum salt), the overall viscosity of the electrolyte composition will be too high, which is not conducive to ion transport. On the other hand, in some embodiments, a weight proportion of the ionic liquid in the electrolyte composition is more than 35 wt% and less than 50 wt%.

In some embodiments, a weight proportion of the phthalocyanine coordination compound is 0.05 wt%-1.10 wt% of a sum of the aluminum salt and the ionic liquid. Alternatively, in some embodiments, the weight proportion of the phthalocyanine coordination compound in the electrolyte composition is between 0.05 wt% and 1.10 wt%. If the phthalocyanine coordination compound is insufficient, the effect of stabilizing the ionic liquid will be greatly reduced; if the phthalocyanine coordination compound is excessive, noticeable precipitation will be generated in the electrolyte composition, thereby affecting ion transport. In some embodiments, the weight proportion of the phthalocyanine coordination compound is 0.10 wt%-1.10 wt%, 0.05 wt%-1.00 wt%, or 0.10 wt%-1.00 wt% of the sum of the aluminum salt and the ionic liquid, or the weight proportion of the phthalocyanine coordination compound in the electrolyte composition is 0.10 wt%-1.10 wt%, 0.05 wt%-1.00 wt%, or 0.10 wt%-1.00 wt%. In some embodiments, in order to achieve a better effect of stabilizing the ionic liquid with a certain amount of usage, the weight proportion of the phthalocyanine coordination compound is 0.05 wt%-0.15 wt% of the sum of the aluminum salt and the ionic liquid, or the weight proportion of the phthalocyanine coordination compound in the electrolyte composition is between 0.05 wt% and 0.15 wt%.

In some embodiments, the electrolyte composition may contain a plurality of the aforementioned aluminum salts, a plurality of the aforementioned ionic liquids, and/or a plurality of the aforementioned phthalocyanine metal coordination compounds. If the electrolyte composition contains the plurality of the aforementioned aluminum salts, the plurality of the aforementioned ionic liquids, and/or the plurality of the aforementioned phthalocyanine metal coordination compounds, then the contents or proportions of the aluminum salt, the ionic liquid, and the phthalocyanine metal coordination compound described previously may be regarded as the sum of aluminum salts, the sum of ionic liquids, and the sum of phthalocyanine metal coordination compounds, respectively.

In some embodiments, the electrolyte composition does not contain a lithium salt (i.e., a compound composed of lithium ions and anions). Examples of the aforementioned lithium salts may be LiPF₆, LiBF₄, LiClO₄, LiCF₃SO₃, or LiAsF₆.

In some embodiments, a sum of the weight proportions of the aluminum salt, the ionic liquid and the phthalocyanine coordination compound in the electrolyte composition is 100 wt%. In other words, in some embodiments, the electrolyte composition consists only of the aluminum salt, the ionic liquid, and the phthalocyanine coordination compound.

### [Battery]

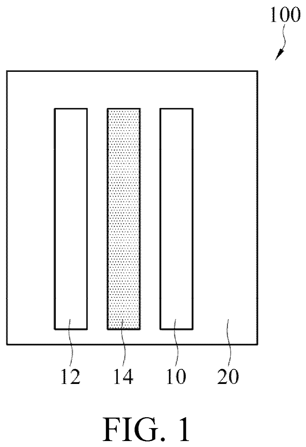

The present disclosure also provides an aluminum battery. Referring to FIG. 1, FIG. 1 illustrates a schematic diagram of an aluminum battery 100 according to an embodiment of the present disclosure. The aluminum battery 100 may include a positive electrode 10, a negative electrode 12, and a separator 14. The separator 14 may be disposed between the positive electrode 10 and the negative electrode 12, so that the negative electrode 12 is separated from the positive electrode 10 by the separator 14 to avoid direct contact between the positive electrode 10 and the negative electrode 12. The aluminum battery 100 includes the above-mentioned electrolyte composition 20. The electrolyte composition 20 is disposed inside the aluminum battery 100 and is located between the positive electrode 10 and the negative electrode 12, so that the electrolyte composition 20 is in contact with the positive electrode 10 and the negative electrode 12. The separator 14 is also immersed in the electrolyte composition 20. The aluminum battery 100 may be a rechargeable secondary battery, but the present disclosure is not limited thereto; in some embodiments, the aluminum battery 100 may be a primary battery. The material of the positive electrode 10 is not particularly limited, as long as the positive electrode 10 formed thereof may stably exist in the aforementioned electrolyte composition 20 and accept electrons transported by ions. In some embodiments, the positive electrode 10 may be formed by coating an intercalation material on a metal substrate. The intercalation material may include graphite slurry (which may include, for example, natural graphite, artificial graphite, a carbon nanotube, graphene) or a transition metal oxide. The metal substrate may be aluminum, nickel, copper, molybdenum, etc., such as an aluminum foil, a nickel foil, a copper foil, or a nickel foil. Further, the metal substrate may also be a metal substrate with a porous structure (such as an aluminum mesh, a nickel mesh, a copper mesh, or a molybdenum mesh; and a corroded metal foil is also acceptable) or a metallic material with a foamed structure (such as foamed aluminum, foamed nickel, foamed copper, or foamed molybdenum). In some embodiments, the material of the positive electrode 10 includes a nickel foil coated with graphite slurry.

In some embodiments, the thickness of the positive electrode 10 is between 100 micrometers and 300 micrometers.

The material of the negative electrode 12 is also not particularly limited, as long as it may stably exist in the aforementioned electrolyte composition 20 and transport electrons to ions in the electrolyte composition 20. In some embodiments, the negative electrode 12 includes a metal or an alloy of the metal, such as aluminum, nickel, copper, or molybdenum. In some embodiments, the negative electrode 12 includes an aluminum foil, a nickel foil, a copper foil, or a nickel foil. Further, the negative electrode 12 may be a metal with a porous structure (such as an aluminum mesh, a nickel mesh, a copper mesh, or a molybdenum mesh; and a corroded metal foil is also acceptable) or a metal with a foamed structure (such as foamed aluminum, foamed nickel, foamed copper, or foamed molybdenum).

In some embodiments, the thickness of the negative electrode 12 is between 10 micrometers and 100 micrometers.

Examples of the material of the separator 14 may be a glass fiber, a polymer fiber (such as polyethylene (PE), polypropylene (PP) and poly(ether sulfones) (PES) fibers), non-woven fabric, a wood fiber, a ceramic fiber or a combination thereof.

In some embodiments, the thickness of the separator 14 is between 20 micrometers and 500 micrometers.

The characteristics and advantages of the electrolyte composition of one or some embodiments of the present disclosure and the aluminum battery containing the same will be described in more detail below through examples and comparative examples. In addition, although the following examples are described herein, some details may be changed as appropriate without departing from the scope of the claims of the present disclosure. That is, the examples described below should not be construed as limiting the present invention.

### [Preparation of Electrolyte Composition]

### <Electrolyte Composition-Example 1>

AlCl₃ (serving as (A) aluminum salt), 1-ethyl-3-methylimidazolium chloride (serving as (B) ionic liquid), and copper phthalocyanine (serving as (C) phthalocyanine coordination compound) were mixed. The weight proportion of AlCl₃ in the electrolyte composition was 62.02 wt%, the weight proportion of 1-ethyl-3-methylimidazolium chloride in the electrolyte composition was 37.88 wt%, and the weight proportion of copper phthalocyanine in the electrolyte composition was 0.1 wt%.

### <Electrolyte Composition-Example 2>

AlCl₃, 1-ethyl-3-methylimidazolium chloride, and copper phthalocyanine were mixed. The weight proportion of AlCl₃ in the electrolyte composition was 61.77 wt%, the weight proportion of 1-ethyl-3-methylimidazolium chloride in the electrolyte composition was 37.73 wt%, and the weight proportion of copper phthalocyanine in the electrolyte composition was 0.5 wt%.

### <Electrolyte Composition-Example 3>

AlCl₃, 1-ethyl-3-methylimidazolium chloride, and copper phthalocyanine were mixed. The weight proportion of AlCl₃ in the electrolyte composition was 61.46 wt%, the weight proportion of 1-ethyl-3-methylimidazolium chloride in the electrolyte composition was 37.54 wt%, and the weight proportion of copper phthalocyanine in the electrolyte composition was 1.0 wt%.

### <Electrolyte Composition-Comparative Example 1>

Only AlCl₃ and 1-ethyl-3-methylimidazolium chloride were mixed. The weight proportion of AlCl₃ in the electrolyte composition was 62.08 wt%, and the weight proportion of 1-ethyl-3-methylimidazolium chloride in the electrolyte composition was 37.92 wt%.

### [Stability Test]

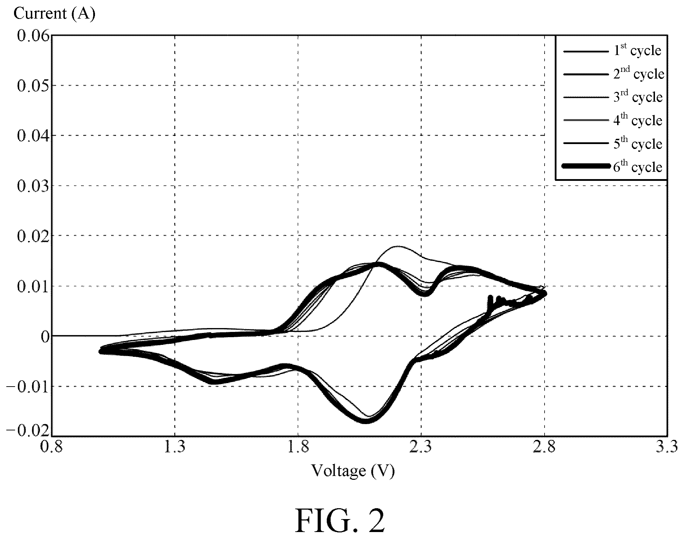

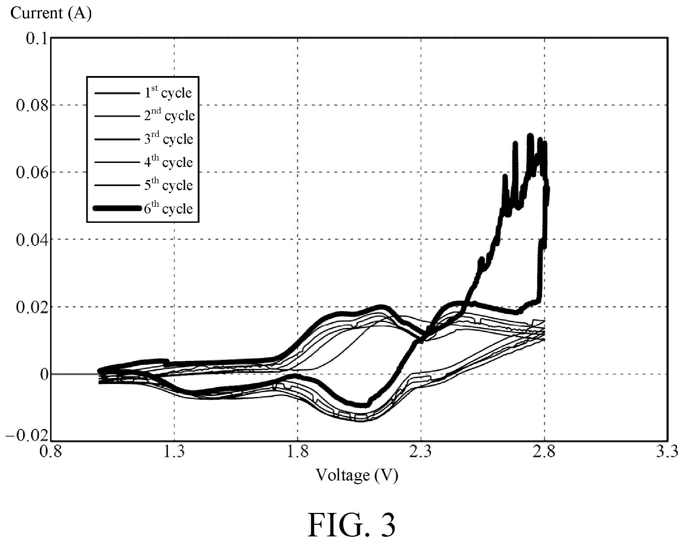

A two-electrode electrochemical cell was used. The negative electrode was an aluminum foil (the thickness may be between 10 micrometers and 100 micrometers, and an aluminum foil with a thickness of 50 micrometers was used in this example), and the positive electrode was a nickel foil coated with graphite slurry (the thickness may be between 10 micrometers and 100 micrometers, and a nickel foil with a thickness of 30 micrometers was used in this example). Cyclic voltammetry measurements for Example 1 and Comparative Example 1 were performed at 25°C using a Metrohm Autolab PGSTAT 204 potentiostat. The measurements were conducted in a potential range of 1.0 V to 2.8 V at a scanning rate of 2 mV/s, and the current changes were recorded to obtain the corresponding cyclic voltammograms, as shown in FIG. 2 and FIG. 3 respectively.

For the electrolyte composition prepared from AlCl₃ and 1-ethyl-3-methylimidazolium chloride (Comparative Example 1), the upper limit of its electrochemical stability window was 2.45 V (i.e., the decomposition voltage was 2.45 V). However, referring to FIG. 2, even when the scanning range exceeds 2.45 V and enters the high voltage region, the 6-cycle curves of the electrolyte composition of Example 1 almost completely overlap, i.e., no obvious side reactions (e.g. component decomposition) have occurred in the electrolyte composition. This shows that the electrolyte composition of Example 1 still maintains good stability during repeated scanning even under high voltage conditions.

In contrast, referring to FIG. 3, the electrolyte composition of Comparative Example 1 shows obvious deformation in the high voltage region by the 6th cycle, and cannot overlap with the original scan pattern, indicating that irreversible reactions such as decomposition occurred in the electrolyte composition.

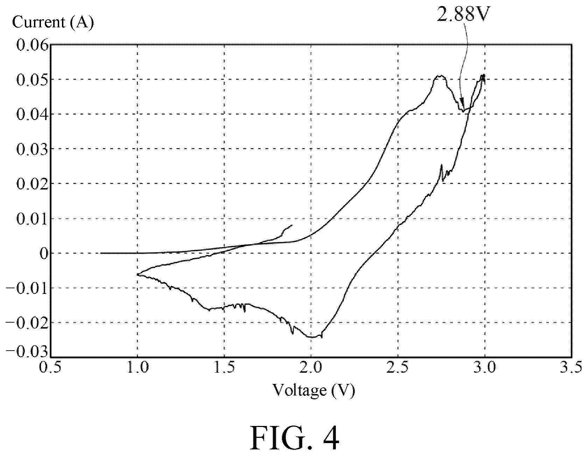

Therefore, according to the results of FIG. 2 and FIG. 3, it is demonstrated that adding the phthalocyanine coordination compound can effectively inhibit the decomposition of the ionic liquid and increase the stability of the electrolyte composition under a high voltage. In addition, the inventors further expanded the scanning range to 1.0 V to 3.0 V to observe the upper limit of the electrochemical stability window of the electrolyte composition of Example 1 at the same scanning rate of 2 mV/s. The cyclic voltammogram of the result is shown in FIG. 4. It can be observed from FIG. 4 that the decomposition voltage of the electrolyte composition of Example 1 can reach 2.88 V (i.e., in the cyclic voltammogram of FIG. 4, when the voltage exceeds 2.88 V, the electrolyte composition initiated decomposition and no redox reaction occurs, resulting in no observable reduction peak in the subsequent cycles, so 2.88 V can be determined as the decomposition voltage of this electrolyte composition), which is greater than the upper limit of the electrochemical stability window of Comparative Example 1 (2.45 V). In some embodiments, the decomposition voltage of the electrolyte composition is higher than 2.45 V and lower than 3.00 V.

### [Discharge Capacity Test 1]

First, the electrolyte composition was prepared into a corresponding coin cell. Taking the electrolyte composition of Example 1 as an example, after placing the lower cover of the battery, a corroded aluminum foil was placed as the negative electrode, and then a separator (glass fiber membrane) was placed. Afterwards, an appropriate amount of the electrolyte composition of Example 1 was added to wet the surface of the separator. Finally, a nickel foil coated with graphite slurry was placed as the positive electrode, the upper cover of the battery was put on, and the battery was sealed tightly with a battery sealing machine. For the electrolyte compositions of the aforementioned Examples 1-3 and Comparative Example 1, the corresponding <Aluminum Battery-Example 1>, <Aluminum Battery-Example 2>, <Aluminum Battery-Example 3>, and <Aluminum Battery-Comparative Example 1> were separately prepared in the same manner as above.

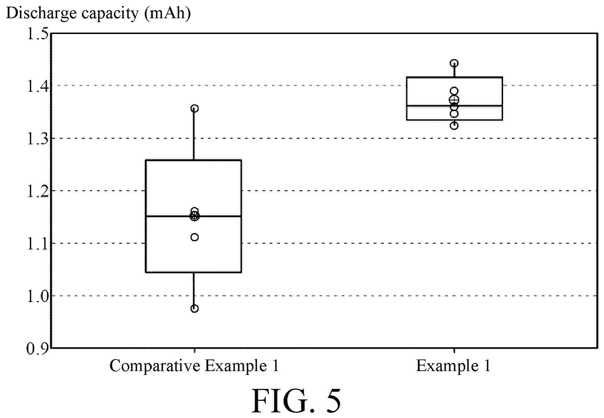

Please refer to FIG. 5. FIG. 5 shows the measurement of the battery capacities of <Aluminum Battery-Comparative Example 1> and <Aluminum Battery-Example 1> at 25°C using a charge-discharge machine (manufacturer: Think Power, Taiwan; model: B1HCL050B). The number of test cycles was 1, the charge cut-off voltage was 2.4 V, the measured charge rate and discharge rate were both 4C, and the number of samples for both <Aluminum Battery-Comparative Example 1> and <Aluminum Battery-Example 1> was 5.

As shown in FIG. 5, the average discharge capacity of <Aluminum Battery-Comparative Example 1> is 1.15 mAh, while the average discharge capacity of <Aluminum Battery-Example 1> is 1.37 mAh. Accordingly, it can be seen that the aluminum battery added with the phthalocyanine coordination compound has an obvious improvement in discharge capacity compared with the aluminum battery not added with the phthalocyanine coordination compound. In other words, even though both are charged under the condition of a low voltage of 2.4 V, since the electrolyte composition in <Aluminum Battery-Example 1> has relatively high stability, <Aluminum Battery-Example 1> can still store a relatively large amount of electrical energy.

### [Discharge Capacity Test 2]

Similar to the aforementioned Discharge Capacity Test 1, in Discharge Capacity Test 2, the charge-discharge machine was also used to measure the battery capacities of <Aluminum Battery-Comparative Example 1> and <Aluminum Battery-Example 1> at 25°C, and the measured charge rate and discharge rate were also both 4C. However, the charge cut-off voltages for <Aluminum Battery-Example 1> were separately higher voltages of 2.5 V, 2.6 V, 2.7 V and 2.8 V (the number of samples for the test results of each voltage is also 5), which was different from the charge cut-off voltage of 2.4 V for <Aluminum Battery-Comparative Example 1>. The test results are shown in FIG. 6.

As can be seen from FIG. 6, for <Aluminum Battery-Example 1>, even though the charging voltage has exceeded 2.45 V, as the charging voltage increases, it can still be observed that the discharge capacity of the battery also gradually increases. When the charging voltage is increased to 2.8 V, the average discharge capacity of <Aluminum Battery-Example 1> can reach 1.67 mAh, which is not only greater than the average discharge capacity of <Aluminum Battery-Comparative Example 1> of 1.15 mAh at a charging voltage of 2.4 V, but also greater than the average discharge capacity of <Aluminum Battery-Example 1> of 1.37 mAh at a charging voltage of 2.4 V. This shows that the electrolyte composition added with the phthalocyanine coordination compound indeed has higher stability (a wider electrochemical stability window). Therefore, even under a high voltage, no decomposition occurs, while ion transport can persist. Thus, when the charge cut-off voltage is increased, the charge capacity of the battery can be further increased.

### [Discharge Capacity Test 3]

In Discharge Capacity Test 3, the charge-discharge machine was used to measure the battery capacities of <Aluminum Battery-Comparative Example 1>, <Aluminum Battery-Example 1>, <Aluminum Battery-Example 2> and <Aluminum Battery-Example 3> at 25°C. The number of test cycles was 1, the charge cut-off voltage of <Aluminum Battery-Comparative Example 1> was 2.4 V, and the charge cut-off voltages of <Aluminum Battery-Example 1>, <Aluminum Battery-Example 2> and <Aluminum Battery-Example 3> were a relatively high voltage of 2.7 V. The measured charge rate and discharge rate were both 4C, and the number of samples for <Aluminum Battery-Comparative Example 1>, <Aluminum Battery-Example 1>, <Aluminum Battery-Example 2> and <Aluminum Battery-Example 3> was 5 separately. The test results are shown in FIG. 7.

As can be seen from FIG. 7, regardless of the addition concentration, since the electrolyte composition added with the phthalocyanine coordination compound has higher stability, a relatively high voltage (e.g., >2.45 V) can be used for charging/discharging to increase the charge/discharge capacity of the battery. Specifically, in FIG. 6, <Aluminum Battery-Example 1>, <Aluminum Battery-Example 2>, and <Aluminum Battery-Example 3> can all be charged at a high voltage of 2.7 V. The average discharge capacities of <Aluminum Battery-Example 1>, <Aluminum Battery-Example 2> and <Aluminum Battery-Example 3> are 1.67 mAh, 1.47 mAh, and 1.27 mAh respectively, all of which are greater than the average discharge capacity of <Aluminum Battery-Comparative Example 1> of 1.15 mAh.

In summary, the present disclosure provides an electrolyte composition for use in an aluminum battery, containing a phthalocyanine coordination compound. Compared with the situation without the phthalocyanine coordination compound, according to some embodiments, the electrolyte composition has better stability and a wider electrochemical stability window. Based on this, in the charge and discharge process at a general voltage, since the ionic liquid in the electrolyte composition is less prone to decomposition, the generation of gas can be reduced, thereby improving the battery life and safety On the other hand, since the electrolyte composition has a wider electrochemical stability window, the aluminum battery using the electrolyte composition can have a higher charge cut-off voltage, further increasing the energy density of the aluminum battery.

## Claims

1. An electrolyte composition, comprising:
an aluminum salt, wherein an anion is F⁻, Cl⁻, Br⁻, I⁻, BF₄⁻, PF₆⁻, [(CF₃SO₂)₂N]⁻, CF₃SO₃⁻, NO₃⁻, CH₃CO₂⁻, SO₄²⁻, C₂O₄²⁻, or [B(C₂O₄)₂]⁻;
an ionic liquid having a structure of the following formula (I): 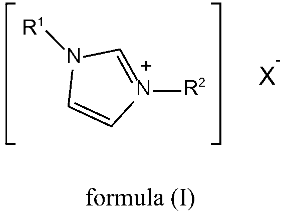
wherein R¹ and R² are each independently selected from C₁-C₅ alkyl and C₂-C₅ alkenyl; and X⁻ is selected from F⁻, Cl⁻, Br⁻, I⁻, BF₄⁻, PF₆⁻, [(CF₃SO₂)₂N]⁻, CF₃SO₃⁻, NO₃⁻, CH₃CO₂⁻, SO₄²⁻, C₂O₄²⁻, and [B(C₂O₄)₂]⁻; and
a phthalocyanine coordination compound containing a divalent metal ion;
wherein in the electrolyte composition, a weight of the aluminum salt is greater than a weight of the ionic liquid, and the weight of the ionic liquid is greater than a weight of the phthalocyanine coordination compound.

2. The electrolyte composition according to claim 1, wherein the phthalocyanine coordination compound is at least one selected from the group consisting of: copper phthalocyanine, iron phthalocyanine, nickel phthalocyanine, zinc phthalocyanine, and cobalt phthalocyanine.

3. The electrolyte composition according to claim 1 or claim 2, wherein a weight proportion of the phthalocyanine coordination compound is 0.05 wt%-1.10 wt% of a sum of the aluminum salt and the ionic liquid.

4. The electrolyte composition according to claim 1 or claim 2, wherein a weight proportion of the aluminum salt in the electrolyte composition is between 50 wt% and 65 wt%, and a weight proportion of the ionic liquid in the electrolyte composition is more than 35 wt% and less than 50 wt%.

5. The electrolyte composition according to any one of claims 1 to 4, wherein the aluminum salt is AlF₂, AlF₃, AlCl₂, AlCl₃, AlBr₂, AlBr₃, AlI₂, or AlI₃, and X⁻ in formula (I) is the same as the anion in the aluminum salt.

6. The electrolyte composition according to claim 5, wherein the aluminum salt is AlF₃, AlCl₃, AlBr₃, or AlI₃, and R¹ and R² in formula (I) are each independently selected from C₁-C₃ alkyl.

7. The electrolyte composition according to claim 6, wherein the aluminum salt is AlCl₃, and the ionic liquid is 1-ethyl-3-methylimidazolium chloride.

8. The electrolyte composition according to any one of claims 1 to 7, wherein the electrolyte composition is free of a lithium salt.

9. The electrolyte composition according to claim 8, wherein the lithium salt comprises LiPF₆, LiBF₄, LiClO₄, LiCF₃SO₃, and LiAsF₆.

10. The electrolyte composition according to any one of claims 1 to 9, wherein the electrolyte composition consists of the aluminum salt, the ionic liquid and the phthalocyanine coordination compound.

11. The electrolyte composition according to any one of claims 1 to 10, wherein the electrolyte composition has a decomposition voltage higher than 2.45 V and lower than 3.00 V.

12. An aluminum battery (100), comprising:
a positive electrode (10);
a separator (14);
a negative electrode (12) separated from the positive electrode (10) by the separator (14); and
the electrolyte composition (20) according to any one of claims 1 to 11 disposed between the positive electrode (10) and the negative electrode (12), wherein the separator (14) is immersed in the electrolyte composition (20).

13. The aluminum battery (100) according to claim 12, wherein the positive electrode (10) comprises a metal substrate coated with graphite slurry or a transition metal oxide.

14. The aluminum battery (100) according to claim 13, wherein the positive electrode (10) comprises a nickel foil coated with graphite slurry.

15. The aluminum battery (100) according to any one of claims 12 to 14, wherein the negative electrode (12) comprises a metal or an alloy of the metal.

16. The aluminum battery (100) according to claim 15, wherein the negative electrode (12) comprises an aluminum foil, a copper foil, or a nickel foil.

17. The aluminum battery (100) according to any one of claims 12 to 16, wherein the separator (14) comprises a glass fiber, a polyethylene fiber, a polypropylene fiber, a polyethersulfone resin fiber, non-woven fabric, a wood fiber, a ceramic fiber or a combination thereof.

18. The aluminum battery (100) according to any one of claims 12 to 17, wherein the aluminum salt is AlCl₃, and the ionic liquid is 1-ethyl-3-methylimidazolium chloride, the phthalocyanine coordination compound is copper phthalocyanine, and the proportion of the phthalocyanine coordination compound is 0.05 wt%-0.15 wt% of the sum of the aluminum salt and the ionic liquid.
